# FASCICULE DE BREVET EUROPEEN

(11) **EP 2 231 419 B1**
(45) Date de publication et mention de la délivrance du brevet: **29.06.2011**
(21) Numéro de dépôt: 08868774.4
(22) Date de dépôt: 16.12.2008
(51) Int. Cl.: B60C 1/00, C08K 3/04, C08K 3/36, C08K 5/098, C08L 7/00, C08L 9/00, C08L 21/00

(54) **COMPOSITION DE CAOUTCHOUC A TRÈS FAIBLE TAUX DE ZINC**
KAUTSCHUKZUSAMMENSETZUNG MIT ÄUSSERT GERINGEM ZINKGEHALT
RUBBER COMPOSITION WITH VERY LOW ZINC CONTENT

(30) Priorité: 21.12.2007 FR 0760207
(43) Date de publication de la demande: 29.09.2010
(73) Titulaire: Société de Technologie MICHELIN, 63000 Clermont-Ferrand (FR); MICHELIN Recherche et Technique S.A., 1763 Granges-Paccot (CH)
(72) Inventeur: VEYLAND, Anne, F-63200 Marsat (FR); ARAUJO DA SILVA, José Carlos, F-63430 Pont Du Château (FR)
(74) Mandataire: Cohen, Sylvia
(86) Numéro de dépôt international: PCT/EP2008/067671
(87) Numéro de publication internationale: WO 2009/083443

(56) Documents cités:
- EP-A- 0 864 606
- WO-A-2006/013056
- JP-A- 58 171 410
- JP-A- 2007 063 519

## Description

La présente invention est relative aux compositions de caoutchoucs diéniques utilisables notamment pour la fabrication de pneumatiques ou de produits semi-finis pour pneumatiques tels que des bandes de roulement.

La vulcanisation des élastomères diéniques par le soufre est largement utilisée dans l'industrie du caoutchouc, en particulier dans celle du pneumatique. Pour vulcaniser les élastomères diéniques, on utilise un système de vulcanisation relativement complexe comportant, en plus du soufre, divers accélérateurs de vulcanisation ainsi qu'un ou plusieurs activateurs de vulcanisation, tout particulièrement des dérivés du zinc tels que l'oxyde de zinc (ZnO) seul ou utilisé avec des acides gras.

Les manufacturiers de pneumatiques recherchent des solutions permettant de très fortement diminuer, voire, si possible, de supprimer le zinc ou ses dérivés de leurs formulations de caoutchouterie, en raison de l'impact environnemental connu de ces composés, notamment vis-à-vis de l'eau et des organismes aquatiques (classification N ; R50-53 :Très toxique pour les organismes aquatiques, peut entraîner des effets néfastes à long terme pour l'environnement aquatique).

Il se trouve toutefois que la diminution du taux d'oxyde de zinc en particulier dans des mélanges à taux majoritaire de caoutchouc naturel tels que ceux utilisés dans les bandes de roulement de pneumatiques poids lourds, entraîne de nombreux inconvénients :
une baisse du nombre de ponts de soufre lors de la vulcanisation des mélanges, ce qui se traduit à la fois par une diminution des modules des mélanges et une augmentation de l'hystérèse, donc une augmentation de la résistance au roulement.

Bien entendu, il semblerait avantageux de supprimer ou très fortement diminuer le zinc en adaptant le système de vulcanisation et, notamment, en augmentant le taux de soufre ainsi que le taux des autres accélérateurs habituellement utilisés avec les dérivés de zinc. Cependant, l'homme du métier sait que si l'augmentation des taux de soufre et d'accélérateur permet effectivement d'atteindre une densité pontale ciblée, en revanche c'est au détriment du compromis entre la distribution du réseau soufre, c'est-à-dire les pourcentages de ponts de soufre formés avec un atome de soufre, deux atomes de soufre, plus de deux atomes de soufre, et les propriétés directement liées à la réticulation telles que le temps de grillage, le temps optimum de cuisson, etc..... Et ceci de façon encore plus marquée pour des matrices élastomériques majoritairement à base de caoutchouc naturel ou d'isoprène de synthèse.

Pour répondre au problème de suppression du zinc, il a donc été également proposé dans le document WO 2003/054081 de remplacer l'oxyde de zinc par un autre oxyde métallique, ou encore par un sel ou oxyde d'un métal de transition appartenant aux groupes IIIA, IVA, VA, VIA, VIIA ou VIIIA du tableau périodique des éléments, particulièrement cobalt ou nickel. Il faut noter que le nickel ne constitue pas une solution viable pour l'avenir du fait de sa toxicité pour la santé humaine.

Par ailleurs de nombreux oxydes ou sels métalliques parmi les colonnes des métaux de transition présentées ci-dessus, ne remplissent pas leur rôle d'activateur quand l'élastomère majoritaire de la composition de caoutchouc est un élastomère isoprénique.

Or, la demanderesse a trouvé une solution nouvelle qui permet de diminuer de façon très importante le taux de zinc dans des formulations de caoutchouterie, tout en préservant les compositions de caoutchouc de l'ensemble des inconvénients précités. Et, en particulier, cette nouvelle solution permet de réaliser une activation de la vulcanisation même dans une composition contenant un élastomère isoprénique majoritairement.

Un premier objet de l'invention concerne donc une composition de caoutchouc, utilisable notamment pour la fabrication de pneumatiques, ladite composition de caoutchouc est à base d'au moins un élastomère diénique, contenant moins de 0,5 pce de zinc, pce signifiant parties pour cent parties d'élastomère, et à base d'au moins :
- une charge renforçante,
- un système de réticulation à base de soufre,
- un carboxylate de cuivre (II) de formule : (RCOO)₂Cu,
dans laquelle R représente un groupe hydrocarboné choisi parmi les alkyles, linéaires ou ramifiés, cycliques ou non ayant de 1 à 20 atomes de carbone, les aryles, les aralkyles ou les alkaryles ayant de 1 à 20 atomes de carbone.

L'invention a tout particulièrement pour objet l'utilisation d'une composition de caoutchouc conforme à l'invention pour la fabrication de pneumatiques ou de produits semi-finis en caoutchouc destinés à ces pneumatiques, ces produits semi-finis étant notamment choisis dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.

Avantageusement, l'invention concerne une composition de caoutchouc dépourvue de zinc.

De préférence, dans le carboxylate de cuivre de formule : (RCOO)₂Cu, R représente un groupe hydrocarboné ayant de 1 à 13 atomes de carbone, et préférentiellement le carboxylate de cuivre est l'acétate de cuivre (II), le 2-éthyl hexanoate de cuivre (II), le nonanoate de cuivre (II) ou le laurate de cuivre (II).

Selon un mode de réalisation privilégié de l'invention, l'élastomère diénique comprend plus de 40 pce d'élastomère isoprénique, de préférence plus de 50 pce d'élastomère isoprénique et notamment, il comprend 100 pce d'élastomère isoprénique.

Avantageusement, la charge renforçante comprend du noir de carbone dans un taux supérieur à 10 pce, de préférence la charge renforçante comprend majoritairement du noir de carbone.

Selon un autre mode de réalisation de l'invention, la charge renforçante comprend un coupage de noir de carbone et d'une charge inorganique, en particulier la charge inorganique comprend de la silice et plus particulièrement la charge renforçante comprend de la silice et du noir de carbone, la quantité de silice étant inférieure ou égale (en poids) à la quantité de noir de carbone.

L'invention concerne également le procédé de préparation d'une composition de caoutchouc à base d'au moins un élastomère diénique, contenant moins de 0,5 pce de zinc, caractérisé en ce qu'on incorpore par malaxage à l'élastomère diénique, au moins une charge renforçante, et un système de réticulation à base de soufre comprenant un carboxylate de cuivre (II) de formule (RCOO)₂Cu, dans laquelle :
R représente un groupe hydrocarboné choisi parmi les alkyles, linéaires ou ramifiés, cycliques ou non ayant de 1 à 20 atomes de carbone, les aryles, les aralkyles ou les alkaryles ayant de 1 à 20 atomes de carbone.

Avantageusement, l'élastomère diénique comprend plus de 40 pce d'élastomère isoprénique, de préférence plus de 50 pce d'élastomère isoprénique et notamment il comprend 100 pce d'élastomère isoprénique.

La composition conforme à l'invention est particulièrement adaptée à la fabrication de bandes de roulement de pneumatiques destinés à équiper des véhicules "Poids-lourds" (c'est-à-dire métro, bus, engins de transport routier (camions, tracteurs, remorques), véhicules hors-la-route), avions, engins de génie civil, agraire, ou de manutention.

L'invention a également pour objet ces Systèmes de liaison au sol des véhicules automobiles, ces pneumatiques et produits semi-finis en caoutchouc eux-mêmes, notamment bandes de roulement, lorsqu'ils comportent une composition de caoutchouc conforme à l'invention. L'invention a notamment pour objet l'utilisation de telles bandes de roulement pour la fabrication de pneumatiques neufs ou le rechapage des pneumatiques usagés.

L'invention concerne également ces Systèmes de liaison au sol des véhicules automobiles, pneumatiques et bandes de roulement tant à l'état cru (i.e., avant cuisson) qu'à l'état cuit (i.e., après réticulation ou vulcanisation).

L'invention ainsi que ses avantages seront aisément compris à la lumière de la description détaillée et des exemples de réalisation qui suivent.

### Description détaillée de l'invention

Les compositions de l'invention sont à base: (i) d'au moins un élastomère diénique, (ii) d'au moins une charge renforçante, et d'un système de vulcanisation à base de soufre comprenant au moins (iii) un carboxylate de cuivre de formule (RCOO)₂Cu.

Par l'expression composition "à base de", on doit entendre dans la présente demande une composition comportant le mélange et/ou le produit de réaction des différents constituants utilisés, certains de ces constituants de base (par exemple l'agent de couplage et la charge inorganique) étant susceptibles de, ou destinés à réagir entre eux, au moins en partie, lors des différentes phases de fabrication des compositions, en particulier au cours de leur vulcanisation (cuisson).

Dans la présente description, sauf indication expresse différente, tous les pourcentages (%) indiqués sont des % en masse.

### Elastomère diénique

Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

Les élastomères diéniques, de manière connue, peuvent être classés en deux catégories : ceux dits "essentiellement insaturés" et ceux dits "essentiellement saturés". Par élastomère diénique "essentiellement insaturé", on entend un élastomère diénique issu au moins en partie de monomères diènes conjugués, ayant un taux de motifs ou unités d'origine diénique (diènes conjugués) qui est supérieur à 15% (% en moles) ; c'est ainsi, par exemple, que des élastomères diéniques tels que les caoutchoucs butyle ou les copolymères de diènes et d'alpha-oléfines type EPDM n'entrent pas dans cette définition et peuvent être qualifiés au contraire d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention :
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di-alkyl(C1-C5)-1,3-butadiène tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isopréne ayant une Tg comprise entre - 20°C et - 70°C.

En résumé, de manière particulièrement préférentielle, l'élastomère diénique de la composition conforme à l'invention est choisi dans le groupe des élastomères diéniques (fortement insaturés) constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

La composition conforme à l'invention est notamment destinée, de manière préférentielle, à une bande de roulement de pneumatique pour véhicule Poids-lourd, l'élastomère diénique est de préférence un élastomère isoprénique, c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène ou un mélange de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%. Pour un tel pneumatique pour véhicule Poids-lourd, l'élastomère diénique peut être aussi constitué, en tout ou partie, d'un autre élastomère fortement insaturé tel que, par exemple, un élastomère SBR.

En particulier, il est avantageux que l'élastomère diénique contiennent au moins 40 pce d'élastomère isoprénique.

Dans le cas d'un pneumatique pour véhicule tourisme. Dans un tel cas, l'élastomère diénique est de préférence un copolymère SBR, en particulier un SBR préparé en solution, utilisé de préférence en mélange avec un polybutadiène ; plus préférentiellement, le SBR a une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre - 20°C et -55°C, et le polybutadiène possède plus de 90% de liaisons cis-1,4.

Les compositions des bandes de roulement de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### Charge renforçante

A titre de charge renforçante, on utilise préférentiellement du noir de carbone dans une proportion supérieur à 10 pce. La quantité de noir de carbone peut être avantageusement supérieure à 30 pce, notamment lorsque celui-ci constitue la seule charge renforçante ou la charge renforçante majoritaire.

Cependant le noir de carbone peut bien entendu être utilisé en coupage avec des charges renforçante et en particulier des charges inorganiques. De telles charges inorganiques comprennent de la silice, préférentiellement cette dernière dans une application pneumatique destinée au poids lourds restera dans une proportion inférieure ou égale en poids à la quantité de noir de carbone.

Plus particulièrement, comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N330, N339, N347, N375, ou encore, selon les applications visées, les noirs de séries plus élevées (par exemple N660, N683, N772). Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("*non-black filler*") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Dans le cas de l'utilisation d'une silice, on utilise de préférence une silice précipitée hautement dispersible, en particulier lorsque l'invention est mise en oeuvre pour la fabrication de pneumatiques présentant une faible résistance au roulement ; comme exemples non limitatifs de telles silices hautement dispersibles préférentielles, on peut citer les silices Ultrasil 7000 et Ultrasil 7005 de la société Degussa, les silices Zeosil 1165MP, 1135MP et Il 15MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-0735088 précitée.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A 125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc de l'invention peuvent être encore cités des (oxyde-)hydroxydes d'aluminium, des aluminosilicates, des oxydes de titane, des carbures ou nitrures de silicium, tous du type renforçants tels que décrits dans les documents WO 99/28376 (ou US 6,610,261), WO 00/73372 (ou US 6,747,087), WO 02/053634 (ou US2004-0030017), WO 2004/003067, WO 2004/056915.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

On rappelle ici que par "agent de couplage" on entend, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-A-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- A représente un groupe divalent permettant de relier Y et X.

Des agents de couplage, notamment silice/ élastomère diénique ont été décrits dans un très grand nombre de documents, les plus connus étant des organosilanes bifonctionnels porteurs de fonctions alkoxyle (c'est-à-dire, par définition, des "alkoxysilanes") à titre de fonctions "Y" et, à titre de fonctions "X", de fonctions capables de réagir avec l'élastomère diénique telles que par exemple des fonctions polysulfure.

A la charge renforçante (i.e., charge inorganique renforçante plus noir de carbone, le cas échéant) peuvent être également ajoutés, selon l'application visée, des charges inertes (non renforçantes) telles que particules d'argile, bentonite, talc, craie, kaolin, utilisables par exemple dans des flancs ou des bandes de roulement de pneumatique colorés.

### Additifs divers

Les compositions de caoutchouc conformes à l'invention peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269 (ou US2003-0212185).

En particulier dans des applications telles que les flancs de pneumatique, l'homme du métier peut faire appel à des plastifiants ou des huiles d'extension en restant généralement dans des quantités inférieures ou égales à 30 pce.

### Systèmes de vulcanisation ou de réticulation

Les compositions comprennent également un système de réticulation à base soit de soufre, soit de donneurs de soufre et/ou de peroxyde et/ou de bismaléimides, des accélérateurs de vulcanisation, des activateurs de vulcanisation. Bien entendu, si un activateur ou un accélérateur est à base de zinc, la somme des éléments zinciques compris au total dans la composition doit respecter un taux de zinc total inférieur à 0,5 pce, conformément à l'invention.

Le système de vulcanisation proprement dit est préférentiellement à base de soufre et d'un accélérateur primaire de vulcanisation, en particulier d'un accélérateur du type sulfénamide, tel que choisi dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés.

Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique.

Les compositions conformes à l'invention peuvent comprendre des oxydes de zinc en très faible quantité pour limiter la quantité de zinc présent dans la composition, de préférence dans des quantités inférieure à 0,5. Et avantageusement la composition est dépourvue d'oxyde de zinc, l'activateur de vulcanisation étant remplacé par un carboxylate de cuivre.

Les carboxylates de cuivre (II) selon l'invention sont des carboxylates de cuivre de formule (RCOO)₂Cu, dans laquelle R représente un groupe hydrocarboné choisi parmi les alkyles, linéaires ou ramifiés, cycliques ou non ayant de 1 à 20 atomes de carbone, les aryles, les aralkyles ou les alkaryles ayant de 1 à 20 atomes de carbone.

On notera de préférence les carboxylates correspondant dont le radical R a entre 1 et 13 atomes de carbones tels que l'acétate de cuivre (II), correspondant à R avec 1 atome de carbone, le 2-éthyl hexanoate de cuivre (II), R a 7 atomes de carbone, le nonanoate de cuivre (II) où R a 8 atomes de carbone et le laurate de cuivre (II), R a 11 atomes de carbone.

### Fabrication des compositions de caoutchouc

L'invention concerne également un procédé de préparation d'une composition de caoutchouc à base d'élastomère diénique, contenant moins de 0,5 pce de zinc, caractérisé en ce qu'on incorpore par malaxage, à au moins un élastomère diénique, au moins une charge renforçante, et au moins un système de réticulation à base de soufre comprenant un carboxylate de cuivre (II) de formule (RCOO)₂Cu, dans laquelle :
R représente un groupe hydrocarboné choisi parmi les alkyles, linéaires ou ramifiés, cycliques ou non ayant de 1 à 20 atomes de carbone, les aryles, les aralkyles ou les alkaryles ayant de 1 à 20 atomes de carbone.

Les compositions de caoutchouc selon l'invention sont fabriquées dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, à savoir le noir de carbone, une éventuelle autre charge renforçante, un éventuel agent de couplage, sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres ; le tout est alors mélangé (phase productive) pendant quelques minutes, par exemple entre 2 et 15 min.

Le système de vulcanisation proprement dit est préférentiellement à base de soufre et d'un accélérateur primaire, de préférence de type sulfénamide comme précédemment détaillé dans le système de vulcanisation.

A ce système de vulcanisation viennent s'ajouter, incorporés au cours de la première phase non-productive et/ou au cours de la phase productive, divers accélérateurs secondaires ou activateurs de vulcanisation connus, dont un ou plusieurs carboxylates de cuivre (II) de formule (RCOO)₂Cu conformes à l'invention, voire d'autres dérivés de zinc dans la mesure où ces derniers restent minoritaires et inférieurs aux quantités précisées dans le paragraphe sur le système de vulcanisation, et éventuellement des acides gras comme l'acide stéarique, des dérivés guanidiques (en particulier diphénylguanidine), etc.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

En résumé, le procédé de préparation d'une composition de caoutchouc à base d'élastomère diénique, contenant moins de 2 pce de zinc, et comportant au moins une charge renforçante, et au moins un système de réticulation à base de soufre comprenant un carboxylate de cuivre de formule (RCOO)₂Cu, dans laquelle :
R représente un groupe hydrocarboné choisi parmi les alkyles, linéaires ou ramifiés, cycliques ou non ayant de 1 à 20 atomes de carbone, les aryles, les aralkyles ou les alkaryles ayant de 1 à 20 atomes de carbone,
   comporte les étapes suivantes :
   - incorporer à l'élastomère diénique, dans un mélangeur, la charge renforçante et le carboxylate de cuivre (II) de formule (RCOO)₂Cu en malaxant thermomécaniquement le tout, en une ou plusieurs fois, jusqu'à atteindre une température maximale comprise entre 130°C et 200°C
   - refroidir l'ensemble à une température inférieure à 100°C,
   - incorporer ensuite : le système de vulcanisation, à l'exception du carboxylate déjà incorporé, ce système de vulcanisation étant tel que le taux de zinc dans la composition finale soit inférieur à 0,5 pce;
   - malaxer le tout jusqu'à une température maximale inférieure à 120°C ;
   - extruder ou calandrer la composition de caoutchouc ainsi obtenue.

### Exemples de réalisation de l'invention

### Mesures de Tests utilisés

Les compositions de caoutchouc sont caractérisées, avant et après cuisson, comme indiqué ci-après.

### Rhéométrie

Les mesures sont effectuées à 150°C avec un rhéomètre à chambre oscillante, selon la norme DIN 53529 - partie 3 (juin 1983). L'évolution du couple rhéométrique, ΔCouple, en fonction du temps décrit l'évolution de la rigidification de la composition par suite de la réaction de vulcanisation. Les mesures sont traitées selon la norme DIN 53529 - partie 2 (mars 1983) : T₀ est le délai d'induction, c'est-à-dire le temps nécessaire au début de la réaction de vulcanisation ; T_{α} (par exemple T₉₅) est le temps nécessaire pour atteindre une conversion de α%, c'est-à-dire α% (par exemple 95%) de l'écart entre les couples minimum et maximum. On mesure également la constante de vitesse de conversion notée K (exprimée en min-1), d'ordre 1, calculée entre 30% et 80% de conversion, qui permet d'apprécier la cinétique de vulcanisation.

### Préparation des compositions

Les différentes compositions présentées dans les essais qui suivent, sont préparées de la façon identique qui suit :
on introduit dans un mélangeur interne, rempli à 70% et dont la température initiale de cuve est d'environ 60°C, successivement la charge renforçante (noir de carbone, autres charges éventuelles optionnelles et optionnellement agent de couplage), l'élastomère diénique ainsi que les divers autres ingrédients dont l'accélérateur secondaire de vulcanisation à l'exception du reste du système de vulcanisation. On conduit alors un travail thermomécanique (phase non-productive) en une étape, qui dure au total environ 3 à 4 minutes, jusqu'à atteindre une température maximale de "tombée" de 165°C. On récupère le mélange ainsi obtenu, on le refroidit puis on incorpore le reste du système de vulcanisation (soufre, accélérateur primaire type sulfénamide) sur un mélangeur externe (homo-finisseur) à 30°C, en mélangeant le tout (phase productive) pendant un temps approprié (par exemple entre 5 et 12 min).

### Exemple

Dans cet exemple, on compare pour différentes matrices élastomériques et charges renforçantes, trois compositions témoin à plusieurs compositions de l'art antérieur et plusieurs compositions conformes à l'invention, ces différentes compositions se distinguant uniquement par leur système de vulcanisation, et plus particulièrement par l'activateur de vulcanisation. On compare en particulier les propriétés rhéométriques de ces compositions.

Toutes ces compositions sont destinées à la fabrication d'une bande de roulement d'un pneumatique pour véhicule automobile poids lourds.

La première composition témoin dite « classique » est une composition ayant un système de vulcanisation contenant de l'oxyde de zinc alors que dans la seconde composition témoin, il n'y a aucun accélérateur ou activateur de vulcanisation et la troisième contient un oxyde de cuivre (II) à la place de l'oxyde de zinc.

Les compositions correspondants à l'art antérieur contiennent d'autres oxydes ou sels métalliques en remplacement de l'oxyde de zinc tandis que les compositions conformes à l'invention ne contiennent des carboxylates de cuivre (II) à la place de l'oxyde de zinc ou des autres oxydes ou sels métalliques des compositions de l'art antérieur.

Le taux d'oxyde ou de sels métalliques dans chacune des compositions a été calculé de sorte à être à isomoles en cation métallique (par exemple le cuivre II pour les compositions conformes à l'invention) par rapport à l'une des compositions témoins incluant 3 pce de ZnO (soit 2,4 pce de zinc), taux classiquement utilisé pour des compositions destinées à la fabrication précitée.

Toutes les compositions ont la même formulation de base suivante exprimé en parties pour cent parties d'élastomère en poids, pce :

| | |
|---|---|
| Elastomère NR (1) | 100 |
| Noir de carbone N220 | 47,5 |
| Soufre/ | 1,5 |
| CBS (2) | 0,6 |

(1) NR : caoutchouc naturel (peptisé)
(2) Accélérateur : N-cyclohexyl-2-benzothiazylsulfénamide (CBS)

Ainsi on notera T1, T2 et T3 les compositions témoin ; A1, A2 et A3 les compositions de l'art antérieur et C1, C2, C3 et C4 les compositions conformes à l'invention. Ces compositions utilisent respectivement les activateurs de vulcanisation suivants au taux suivants:
- pour T1 : l'oxyde de zinc, ZnO, avec de l'acide stéarique,
- pour T2 : aucun activateur,
- pour T3 : l'oxyde de cuivre (II),
- pour A1 : l'oxyde de fer,
- pour A2 : le dioxyde de zirconium,
- pour A3 : le 2-éthylhexanoate de zirconium,
- pour C1 : l'acétate de cuivre (II),
- pour C2 : le 2-éthylhexanoate de cuivre (II),
- pour C3 : le nonanoate de cuivre (II),
- pour C4 : le laurate de cuivre (II).

Ces compositions T1, T2, A1, A2 et A3 se distinguent donc les unes des autres comme présenté dans le tableau 1 qui suit, les quantités étant indiquées en pce.

**Tableau 1**

| **Compositions** | **T1** | **T2** | **T3** | **A1** | **A2** | **A3** | **C1** | **C2** | **C3** | **C4** |
|---|---|---|---|---|---|---|---|---|---|---|
| **ZnO / Ac.stéarique** | 3/2,5 | - | - | - | - | - | - | - | - | - |
| **Oxyde de cuivre (II)** | - | - | 2,9 | - | - | - | - | - | - | - |
| **Oxyde de fer (II)** | - | - | - | 2,6 | - | - | - | - | - | - |
| **Dioxyde de zirconium** | - | - | - | - | 4,5 | - | - | - | - | - |
| **2-éthylhexanoate de zirconium** | - | - | - | - | - | 24,3 | - | - | - | - |
| **Acétate de cuivre (II)** | - | - | - | - | - | - | 7,4 | - | - | - |
| **2-éthylhexanoate de cuivre (II)** | - | - | - | - | - | - | - | 12,9 | - | - |
| **Nonanoate de cuivre (II)** | - | - | - | - | - | - | - | - | 13,9 | - |
| **Laurate de cuivre (II)** | - | - | - | - | - | - | - | - | - | 17 |

Les propriétés rhéométriques obtenues pour ces différentes compositions sont portées sur le tableau 2 qui suit.

**Tableau 2**

| **Compositions** | **T1** | **T2** | **T3** | **A1** | **A2** | **A3** | **C1** | **C2** | **C3** | **C4** |
|---|---|---|---|---|---|---|---|---|---|---|
| **ΔCouple (dN.m)** | 6,6 | 2,9 | 3 | 2,9 | 2,9 | 1,6 | 5,3 | 5,5 | 5,3 | 4,8 |
| **T₀ (mn)** | 3,7 | 0,0 | 2,1 | 0,0 | 0,0 | 0,0 | 1,0 | 1,1 | 1,2 | 1,2 |
| **T₉₅ (mn)** | 15,6 | 31,5 | 7,3 | 35,8 | 42,6 | 37,0 | 11,4 | 17,6 | 16,4 | 17,8 |
| **K (mn⁻¹)** | 0,25 | 0,10 | 0,58 | 0,08 | 0,07 | 0,08 | 0,29 | 0,18 | 0,20 | 0,18 |

Au vu des résultats portés sur le tableau 2, on constate aisément que les compositions A1, A2 et A3 correspondant aux compositions de l'art antérieur et à base respectivement d'oxyde de fer, de dioxyde de zirconium et de 2-éthylhexanoate de zirconium présente des résultats comparables à la composition témoin T2 qui n'inclut aucun activateur de vulcanisation. Il est donc clair que pour ces compositions les oxydes ou sels métalliques utilisés ne permettent pas de réaliser une activation de la vulcanisation (ΔCouple obtenu montrant une très faible réticulation, T₉₅ élevé signifiant un démarrage de réaction très lent, avec une constante K très faible représentative d'une très lente cinétique).

On constate également que la composition T3 comprenant de l'oxyde de cuivre ne permet pas non plus d'activer la vulcanisation comme le montre clairement le très faible ΔCouple obtenu signifiant une faible réticulation (la constante K indiquant une cinétique rapide mais qui ne concerne que peu de liaisons).

On constate que les différentes compositions conformes à l'invention C1 à C4 incluant des carboxylates de cuivre permettent d'activer efficacement la vulcanisation (ΔCouple comparable à celui de la composition T1 contenant de l'oxyde de zinc et très supérieur aux autres compositions témoins et de l'art antérieur,ce qui montre clairement une activation efficace de la vulcanisation, de même pour la constante cinétique K). Ceci apparaît d'autant plus étonnant après avoir constaté que l'oxyde de cuivre (II) ne permettait pas d'activer la vulcanisation, pas plus qu'un carboxylate de zirconium.

## Revendications

1. Composition de caoutchouc à base d'au moins un élastomère diénique, contenant moins de 0,5 pce de zinc, pce signifiant parties pour cent parties d'élastomère, et à base d'au moins :
- une charge renforçante,
- un système de réticulation à base de soufre, comprenant un carboxylate de cuivre (II) de formule : (RCOO)₂Cu,
dans laquelle R représente un groupe hydrocarboné choisi parmi les alkyles, linéaires ou ramifiés, cycliques ou non ayant de 1 à 20 atomes de carbone, les aryles, les aralkyles ou les alkaryles ayant de 1 à 20 atomes de carbone.

2. Composition selon la revendication 1, dans laquelle R représente un groupe hydrocarboné ayant de 1 à 13 atomes de carbone.

3. Composition selon la revendication 1, qui est dépourvue de zinc.

4. Composition selon l'une quelconque des revendications précédentes, dans laquelle le carboxylate de cuivre est l'acétate de cuivre.

5. Composition selon l'une quelconque des revendications 1 à 3, dans laquelle le carboxylate de cuivre est le 2-éthyl-hexanoate de cuivre.

6. Composition selon l'une quelconque des revendications 1 à 3, dans laquelle le carboxylate de cuivre est le nonanoate de cuivre.

7. Composition selon l'une quelconque des revendications 1 à 3, dans laquelle le carboxylate de cuivre est le laurate de cuivre.

8. Composition selon l'une quelconque des revendications précédentes, dans laquelle l'élastomère diénique comprend au moins 40 pce d'élastomère isoprénique.

9. Composition selon l'une quelconque des revendications précédentes, dans laquelle l'élastomère diénique comprend au moins 50 pce d'élastomère isoprénique.

10. Composition selon l'une quelconque des revendications précédentes, dans laquelle la charge renforçante comprend du noir de carbone à un taux supérieur à 10 pce et dans laquelle la charge renforçante comprend majoritairement du noir de carbone.

11. Composition selon la revendication 10, dans laquelle la charge renforçante comprend un coupage de noir de carbone et d'une charge inorganique.

12. Procédé de préparation d'une composition de caoutchouc à base d'au moins un élastomère diénique, contenant moins de 0,5 pce de zinc, **caractérisé en ce qu'**on incorpore par malaxage à l'élastomère diénique, au moins une charge renforçante, et un système de réticulation à base de soufre comprenant un carboxylate de cuivre (II) de formule (RCOO)₂Cu, dans laquelle :
R représente un groupe hydrocarboné choisi parmi les alkyles, linéaires ou ramifiés, cycliques ou non ayant de 1 à 20 atomes de carbone, les aryles, les aralkyles ou les alkaryles ayant de 1 à 20 atomes de carbone.

13. Pneumatique comportant une composition de caoutchouc selon l'une quelconque des revendication 1 à 11.

14. Produit semi-fini entrant dans la fabrication de pneumatique comportant une composition de caoutchouc selon l'une quelconque des revendications 1 à 11.

15. Bande de roulement de pneumatique comportant une composition de caoutchouc selon l'une quelconque des revendications 1 à 11.

## Claims

1. Rubber composition based on at least one diene elastomer, containing less than 0.5 phr of zinc, phr signifying parts per hundred parts of elastomer, and based on at least:
- one reinforcing filler;
- one sulphur-based crosslinking system, comprising a copper(II) carboxylate of formula: (RCOO)₂Cu,
in which R represents a hydrocarbon-based group chosen from linear or branched, cyclic or non-cyclic alkyls having from 1 to 20 carbon atoms, aryls, aralkyls or alkaryls having from 1 to 20 carbon atoms.

2. Composition according to Claim 1, in which R represents a hydrocarbon-based group having from 1 to 13 carbon atoms.

3. Composition according to Claim 1, which is free of zinc.

4. Composition according to any one of the preceding claims, in which the copper carboxylate is copper acetate.

5. Composition according to any one of Claims 1 to 3, in which the copper carboxylate is copper 2-ethylhexanoate.

6. Composition according to any one of Claims 1 to 3, in which the copper carboxylate is copper nonanoate.

7. Composition according to any one of Claims 1 to 3, in which the copper carboxylate is copper laurate.

8. Composition according to any one of the preceding claims, in which the diene elastomer comprises at least 40 phr of isoprene elastomer.

9. Composition according to any one of the preceding claims, in which the diene elastomer comprises at least 50 phr of isoprene elastomer.

10. Composition according to any one of the preceding claims, in which the reinforcing filler comprises carbon black at a content greater than 10 phr and in which the reinforcing filler predominantly comprises carbon black.

11. Composition according to Claim 10, in which the reinforcing filler comprises a blend of carbon black and of an inorganic filler.

12. Process for preparing a rubber composition based on at least one diene elastomer, containing less than 0.5 phr of zinc, **characterized in that** incorporated into the diene elastomer via kneading is at least one reinforcing filler, and one sulphur-based crosslinking system comprising a copper(II) carboxylate of formula (RCOO)₂Cu, in which:
R represents a hydrocarbon-based group chosen from linear or branched, cyclic or non-cyclic alkyls having from 1 to 20 carbon atoms, aryls, aralkyls or alkaryls having from 1 to 20 carbon atoms.

13. Tyre comprising a rubber composition according to any one of Claims 1 to 11.

14. Semi-finished product being incorporated into tyre manufacture comprising a rubber composition according to any one of Claims 1 to 11.

15. Tyre tread comprising a rubber composition according to any one of Claims 1 to 11.

## Patentansprüche

1. Kautschukzusammensetzung auf Basis von mindestens einem Dienelastomer mit einem Zinkgehalt von weniger als 0,5 phr, wobei phr Teile pro hundert Teile Elastomer bedeutet, und auf Basis von mindestens:
- einem verstärkenden Füllstoff,
- einem Vernetzungssystem auf Basis von Schwefel, das ein Kupfer(II)-carboxylat der Formel (RCOO)₂Cu umfaßt, worin R für eine unter linearen oder verzweigten, cyclischen oder acyclischen Alkylresten mit 1 bis 20 Kohlenstoffatomen, Arylresten, Aralkylresten oder Alkarylresten mit 1 bis 20 Kohlenstoffatomen ausgewählte Kohlenwasserstoffgruppe steht.

2. Zusammensetzung nach Anspruch 1, wobei R für eine Kohlenwasserstoffgruppe mit 1 bis 13 Kohlenstoffatomen steht.

3. Zusammensetzung nach Anspruch 1, die zinkfrei ist.

4. Zusammensetzung nach einem der vorhergehenden Ansprüche, in der es sich bei dem Kupfercarboxylat um Kupferacetat handelt.

5. Zusammensetzung nach einem der Ansprüche 1 bis 3, wobei es sich bei dem Kupfercarboxylat um Kupfer-2-ethylhexanoat handelt.

6. Zusammensetzung nach einem der Ansprüche 1 bis 3, wobei es sich bei dem Kupfercarboxylat um Kupfernonanoat handelt.

7. Zusammensetzung nach einem der Ansprüche 1 bis 3, wobei es sich bei dem Kupfercarboxylat um Kupferlaurat handelt.

8. Zusammensetzung nach einem der vorhergehenden Ansprüche, wobei das Dienelastomer 40 phr Isoprenelastomer umfaßt.

9. Zusammensetzung nach einem der vorhergehenden Ansprüche, wobei das Dienelastomer 50 phr Isoprenelastomer umfaßt.

10. Zusammensetzung nach einem der vorhergehenden Ansprüche, wobei der verstärkende Füllstoff Ruß in einem Gehalt von mehr als 10 phr umfaßt und der verstärkende Füllstoff überwiegend Ruß umfaßt.

11. Zusammensetzung nach Anspruch 10, wobei der verstärkende Füllstoff einen Verschnitt von Ruß und einem anorganischen Füllstoff umfaßt.

12. Verfahren zur Herstellung einer Kautschukzusammensetzung auf Basis von mindestens einem Dienelastomer mit einem Zinkgehalt von weniger als 0,5 phr, **dadurch gekennzeichnet, daß** man durch Kneten mindestens einen verstärkenden Füllstoff und ein Vernetzungssystem auf Basis von Schwefel, das ein Kupfer(II)-carboxylat der Formel (RCOO)₂Cu umfaßt, worin R für eine unter linearen oder verzweigten, cyclischen oder acyclischen Alkylresten mit 1 bis 20 Kohlenstoffatomen, Arylresten, Aralkylresten oder Alkarylresten mit 1 bis 20 Kohlenstoffatomen ausgewählte Kohlenwasserstoffgruppe steht, in das Dienleastomer einarbeitet.

13. Reifen, umfassend eine Kautschukzusammensetzung nach einem der Ansprüche 1 bis 11.

14. Halbzeug für die Reifenherstellung, umfassend eine Kautschukzusammensetzung nach einem der Ansprüche 1 bis 11.

15. Reifenlauffläche, umfassend eine Kautschukzusammensetzung nach einem der Ansprüche 1 bis 11.
